# EUROPÄISCHE PATENTSCHRIFT

(11) **EP 2 018 511 B1**
(45) Veröffentlichungstag und Bekanntmachung des Hinweises auf die Patenterteilung: **28.06.2017**
(21) Anmeldenummer: 07724627.0
(22) Anmeldetag: 26.04.2007
(51) Int. Cl.: G01B 5/008

(54) **MASCHINE ZUM VERMESSEN ODER BEARBEITEN VON WERKSTÜCKEN, INSBESONDERE KOORDINATENMESSGERÄT**
MACHINE FOR MEASURING OR MACHINING WORKPIECES, ESPECIALLY COORDINATE MEASURING MACHINE
MACHINE DE MESURE OU D'USINAGE DE PIÈCES, NOTAMMENT APPAREIL DE MESURE DE COORDONNÉES

(30) Priorität: 08.05.2006 DE 102006022501
(43) Veröffentlichungstag der Anmeldung: 28.01.2009
(73) Patentinhaber: Carl Zeiss Industrielle Messtechnik GmbH, 73447 Oberkochen (DE)
(72) Erfinder: LEITENBERGER, Werner, 89520 Heidenheim (DE)
(74) Vertreter: Witte, Weller & Partner Patentanwälte mbB
(86) Internationale Anmeldenummer: PCT/EP2007/003697
(87) Internationale Veröffentlichungsnummer: WO 2007/128431

(56) Entgegenhaltungen:
- DE-A1- 3 515 685
- DE-A1- 3 936 463
- DE-A1- 10 120 553
- JP-A- 2 278 009
- JP-A- 4 145 219
- JP-A- 57 077 905
- US-A- 5 036 236
- US-A- 6 065 220
- US-A1- 2004 182 176
- US-A1- 2005 097 766
- US-B1- 6 238 092

## Beschreibung

Die vorliegende Erfindung betrifft eine Maschine zum Vermessen oder Bearbeiten von Werkstücken, insbesondere ein Koordinatenmessgerät, mit einem Maschinenkopf, der relativ zu einer Werkstückaufnahme verfahrbar ist, und mit einem Maschinengestell, an dem zumindest der Maschinenkopf angeordnet ist, wobei das Maschinengestell einen Führungskörper mit zumindest einer Führungsfläche für ein Luftlager sowie einen Gegenkörper aufweist, der an der Führungsfläche über das Luftlager abgestützt ist, und wobei der Führungskörper und der Gegenkörper entlang der Führungsfläche relativ zueinander verfahrbar sind.

Eine solche Maschine ist in Form eines Koordinatenmessgerätes aus DE 34 41 488 A1 bekannt.

Ein Koordinatenmessgerät ist eine Maschine mit einem Messkopf, der relativ zu einem Messobjekt in einem Messvolumen verfahren werden kann. Der Messkopf wird in eine definierte Position relativ zu einem Messpunkt an dem Messobjekt gebracht. Bei taktilen Koordinatenmessgeräten wird der Messpunkt beispielsweise mit einem am Messkopf angeordneten Taststift angetastet. Anschließend lassen sich Raumkoordinaten des Messpunktes anhand der bekannten Stellung des Messkopfes im Messvolumen bestimmen. Wenn man an einem Messobjekt die Raumkoordinaten von mehreren definierten Messpunkten bestimmt, lassen sich außerdem geometrische Abmessungen oder sogar die Raumform des Messobjektes bestimmen. Ein typisches Einsatzgebiet für solche Koordinatenmessgeräte ist die Vermessung von Werkstücken im Rahmen einer Qualitätskontrolle.

Wenngleich die vorliegende Erfindung bevorzugt bei Koordinatenmessgeräten zum Einsatz kommt, kann sie auch bei Werkzeugmaschinen und anderen Maschinen verwendet werden, bei denen ein Maschinenkopf mit hoher Genauigkeit relativ zu einem Werkstück oder dergleichen bewegt werden soll.

Bei dem bekannten Koordinatenmessgerät ist der Messkopf an einem Maschinengestell in Portalbauweise angeordnet. Der Messkopf befindet sich am unteren freien Ende einer Pinole, die am Querträger des Portals sitzt und die relativ zu dem Portal in zwei Raumrichtungen verfahren werden kann. Die Pinole besteht hier aus einem Aluminiumrohr mit rechteckigem Querschnitt, wobei die Außenseiten des Rohrs die Führungsflächen der Pinole darstellen. Die Pinole gleitet mit ihren Führungsflächen zwischen Luftlagern, die an einem Querschlitten angeordnet sind, der wiederum an dem Portal beweglich gelagert ist. Die Verwendung eines Aluminiumrohrs als Führungskörper, der die Führungsflächen für die Luftlager bildet, hat sich bei Koordinatenmessgeräten als eine zweckmäßige Realisierung erwiesen, weil Aluminium eine gute Wärmeleitfähigkeit besitzt, so dass thermisch verursachte Deformationen gering sind.

Alternativ werden bei bekannten Koordinatenmessgeräten auch Führungskörper aus Granit, Stahl, Al₂O₃-Keramik oder Siliziumkarbid verwendet. All diese Materialien bieten einerseits eine hohe Steifigkeit, was für die Führungsgenauigkeit des Maschinengestells von Vorteil ist. Nachteilig ist andererseits, dass die Oberflächen der Materialien sehr aufwändig bearbeitet werden müssen, da Führungsflächen für Luftlager hohe Anforderungen an die Ebenheit, Rautiefe und Dichtheit der Oberfläche stellen. Dies hat zur Folge, dass die Herstellung einer luftlagergerechten Oberfläche bis zu 2/3 der Herstellungskosten eines geeigneten Führungskörpers ausmacht. Aus einem Buch mit dem Titel "Koordinatenmesstechnik im industriellen Einsatz" von Hans Joachim Neumann, erschienen im Verlag Moderne Industrie, ist es bekannt, das bei Koordinatenmessgeräten der oberen Geräteklasse Führungskörper verwendet werden, die aus einem hart beschichteten Aluminium bestehen. Diese Technologie wird von der Anmelderin der vorliegenden Erfindung unter der Bezeichnung "Carat" vermarktet. Auch die Herstellung solcher Führungskörper ist jedoch aufwändig und teuer.

Aus JP 2002-130269 ist ein Kreuzschlitten bekannt, bei dem ein Führungskörper und ein Gegenkörper, die über Luftlager aneinander abgestützt sind, aus Quarzglas hergestellt sind. Dieser bekannte Kreuzschlitten ist für Anwendungen im Bereich der Nanotechnologie und im Bereich der Biotechnologie vorgesehen.

Darüber hinaus ist es bei gattungsgemäßen Maschinen seit langem bekannt, Maßstäbe aus Glas zu verwenden, um eine aktuelle Verfahrposition des Messkopfes und/oder der Werkstückaufnahme zu bestimmen. Die Glasmaßstäbe tragen typischerweise eine Skala, die mit Hilfe von geeigneten Sensoren abgelesen werden kann. Typischerweise sind die Glasmaßstäbe an dem Führungskörper einer Verfahrachse oder zumindest parallel zu dem Führungskörper an dem Maschinengestell befestigt. Beispielsweise offenbart DE 29 43 431 A1 eine Messmaschine, bei der ein Glasmaßstab an der Unterseite eines Werkstücktisches angeordnet ist. Mit der mechanischen Führung des Maschinenkopfes und/oder der Werkstückaufnahme hat der Glasmaßstab selbst jedoch nichts zu tun

DE 35 15 685 A1 offenbart eine Koordinaten-Messmaschine mit einem an einem Gegenkörper über Luftlager abgestützten Führungskörper, dessen Führungsfläche chemisch vernickelt ist. Vor diesem Hintergrund ist es eine Aufgabe der vorliegenden Erfindung, eine Maschine der eingangs genannten Art weiterzubilden, so dass die Herstellungskosten bei zumindest annähernd gleicher Genauigkeit der Linearführungen reduziert sind.

Diese Aufgabe wird gemäß einem Aspekt der vorliegenden Erfindung durch eine Maschine der eingangs genannten Art gelöst, bei der der Führungskörper einen tragenden Grundkörper und eine Deckplatte beinhaltet, die auf dem Grundkörper angeordnet ist und die Führungsfläche für das Luftlager bildet.

Die neue Maschine besitzt somit einen Führungskörper, der zumindest zweiteilig ausgebildet ist und einen Grundkörper und eine darauf angeordnete Deckplatte (Deckkörper) besitzt. Im Gegensatz zu einer Beschichtung handelt es sich bei der Deckplatte also um einen zweiten Körper, der zusammen mit dem tragenden Grundkörper den Führungskörper bildet. Mit anderen Worten ist der Führungskörper der neuen Maschine aus zumindest zwei zuvor getrennten Körperteilen zusammengesetzt.

Dadurch, dass man eine separate Deckplatte auf einem tragenden Grundkörper befestigt, kann der Grundkörper mit wesentlich geringeren Anforderungen, insbesondere im Hinblick auf die Rauhigkeit und Dichtheit der Oberfläche, hergestellt werden. Andererseits kann die Deckplatte, die die Führungsfläche für das Luftlager bildet, weitgehend unabhängig von den Traglasten hergestellt werden, die der Führungskörper insgesamt aufnehmen muss. Insbesondere ist es möglich, für die Deckplatte Materialien zu verwenden, die für sich genommen nicht in der Lage wären, die erforderliche Traglast aufzunehmen.

Darüber hinaus ist es aufgrund des zweiteiligen Aufbaus möglich, Führungsflächen für Luftlager in großer Stückzahl bzw. in großen Abmessungen herzustellen und erst anschließend auf die individuellen Abmessungen einer Maschine zurechtzuschneiden. Allein schon hierdurch lassen sich die Herstellungskosten der neuen Maschine reduzieren. Zusätzlich bietet die Flexibilität, die sich aufgrund des möglichen Materialmixes ergibt, ein Kostenreduzierungspotential. In einem besonders bevorzugten Ausführungsbeispiel wird herkömmliches Floatglas als Deckplatte verwendet, da sich gezeigt hat, dass die Rauhigkeit und Dichtheit von Floatglas für eine Abstützung von Luftlagern gut geeignet ist. Die Herstellungskosten für die Deckplatte sind damit wesentlich geringer als beispielsweise die Bearbeitung eines Aluminiumgrundkörpers, der eine vergleichbare Rauhigkeit und Dichtheit bieten soll.

In anderen Ausführungsbeispielen können jedoch auch andere Materialien für die Deckplatte verwendet werden, beispielsweise spezielle Gläser oder auch andere Werkstoffe, die eine geeignete Dichtheit und Rauheit aufweisen.

Insgesamt lässt sich durch eine geeignete Kombination eines tragenden Grundkörpers mit einem luftlagertauglichen glatten Deckmaterial ein Führungskörper herstellen, der im Vergleich zu bislang bekannten Führungskörpern deutlich billiger ist. Infolgedessen sind auch die Herstellungskosten für die Maschine insgesamt reduziert. Die oben genannte Aufgabe ist daher vollständig gelöst.

In einer bevorzugten Ausgestaltung der Erfindung sind der Grundkörper und die Deckplatte aus verschiedenen Materialien hergestellt. Beispielsweise besteht der Grundkörper aus Aluminium, Granit, Al₂O₃-Keramik, Stahl, Siliziumkarbid oder einer Kombination davon. Demgegenüber ist die Deckplatte in bevorzugten Ausgestaltungen der Erfindung aus Glas hergestellt, insbesondere aus Floatglas bzw. Fensterglas.

Die Verwendung unterschiedlicher Materialien für den Grundkörper und die Deckplatte ermöglicht es, die Materialien entsprechend den unterschiedlichen Aufgabenstellungen zu einem optimalen Kosten-Nutzen-Verhältnis auszuwählen. Während es bei dem Grundkörper vorrangig darauf ankommt, eine möglichst gerade, tragfähige und langzeitstabile Struktur zu finden, dient die Deckplatte vorrangig dazu, die für eine Luftlagerführung erforderliche Rauheit und Dichtheit bereitzustellen. Glas ist beispielsweise aufgrund seiner thermischen Leitfähigkeit, aufgrund seines Gewichts und seiner Fließfähigkeit nicht optimal für die Herstellung eines Führungskörpers geeignet, zumindest wenn die Bewegungshübe und Traglasten groß sind. Andererseits ist Floatglas relativ günstig und es besitzt eine Rauheit und Dichtheit, die für die Abstützung von Luftlagern gut geeignet ist. Umgekehrt eignet sich beispielsweise Aluminium aufgrund seiner thermischen Leitfähigkeit und seines relativ geringen Gewichts sehr gut für die Herstellung von tragenden Grundkörpern. Die Verwendung von unterschiedlichen Materialien für den Grundkörper und die Deckplatte ermöglicht eine wesentliche Reduzierung der Herstellungskosten ohne Einbußen in Bezug auf die Qualität und Führungsgenauigkeit der Maschine.

In einer weiteren Ausgestaltung besitzt der Grundkörper einen ersten thermischen Ausdehnungskoeffizienten, die Deckplatte besitzt einen zweiten thermischen Ausdehnungskoeffizienten, und zwischen der Deckplatte und dem Grundkörper ist zumindest ein Zwischenelement angeordnet, das einen dritten thermischen Ausdehnungskoeffizienten besitzt, wobei der dritte thermische Ausdehnungskoeffizient größenmäßig zwischen dem ersten und zweiten Ausdehnungskoeffizienten liegt.

In dieser Ausgestaltung besitzt der Führungskörper einen mehrlagigen Aufbau mit zumindest einem Zwischenelement (Zwischenlage) zwischen dem Grundkörper und der Deckplatte. Diese Ausgestaltung ist besonders vorteilhaft, wenn zwei unterschiedliche Materialien mit deutlich voneinander abweichenden Ausdehnungskoeffizienten für den Grundkörper und die Deckplatte verwendet werden, was zu mechanischen Spannungen und Deformationen führen kann. Die Verwendung eines Zwischenelements mit einem Ausdehnungskoeffizienten, der betragsmäßig zwischen den Ausdehnungskoeffizienten der Deckplatte und des Grundkörpers liegt, ermöglicht einen stufenweisen bzw. schichtweisen Abbau der temperaturbedingten Spannungen. Thermisch bedingte Deformationen lassen sich dadurch reduzieren. Besonders vorteilhaft ist es, wenn ein oder mehrere Zwischenelemente in Form von Folienbändern verwendet werden, beispielsweise in Form von dünnen Metallfolien.

In einer weiteren Ausgestaltung besteht die Deckplatte aus Glas, insbesondere aus Floatglas.

Die Vorteile dieser Ausgestaltung, nämlich die günstigen Materialkosten und die gute Eignung des Materials für die Führungsfläche eines Luftlagers, wurden bereits oben ausführlich erläutert.

In einer weiteren Ausgestaltung liegt die Deckplatte weitgehend kongruent auf dem Grundkörper auf.

In dieser Ausgestaltung ist der Führungskörper weitgehend kompatibel zu herkömmlichen Führungskörpern aus Aluminium, Granit oder Keramik, da er eine weitgehend homogene Führungsfläche aufweist, die den darunter liegenden Grundkörper verdeckt. Außerdem bietet diese Ausgestaltung eine maximale Lauffläche zum Abstützen des Luftlagers in Verbindung mit geringen Abmessungen des Führungskörpers.

In einer weiteren Ausgestaltung ist die Deckplatte zumindest teilweise beweglich auf dem Grundkörper angeordnet. In einer besonders bevorzugten Ausgestaltung ist die Deckplatte schwimmend auf einer ölartigen Substanz, insbesondere einem Haftöl, auf dem Grundkörper gelagert.

Eine relative Beweglichkeit der Deckplatte gegenüber dem Grundkörper trägt dazu bei, mechanische Spannungen innerhalb des Führungskörpers aufgrund von unterschiedlichen thermischen Ausdehnungskoeffizienten zu vermeiden. Die unterschiedlichen Materialien können sich in dieser Ausgestaltung der Erfindung zumindest teilweise unabhängig voneinander ausdehnen und zusammenziehen. Die Maßhaltigkeit des Führungskörpers wird mit dieser Ausgestaltung verbessert.

In einer weiteren Ausgestaltung sind die Deckplatte und der Grundkörper stellenweise starr miteinander verbunden.

Diese Ausgestaltung sorgt einerseits dafür, dass die Deckplatte positionsgenau auf dem Grundkörper gehalten wird. Andererseits ermöglicht eine nur stellenweise starre Verbindung eine lokale relative Beweglichkeit, was vorteilhaft ist, um Deformationen aufgrund unterschiedlicher thermischer Ausdehnungen zu vermeiden.

In einer weiteren Ausgestaltung ist die Deckplatte an dem Grundkörper mit Hilfe von elastischen Halteelementen fixiert. In besonders bevorzugten Ausgestaltungen sind die elastischen Halteelemente elastische Klebepfropfen, die sowohl mit dem Grundkörper als auch mit der Deckplatte verklebt sind, jedoch eine relative Beweglichkeit in Querrichtung ermöglichen. Alternativ hierzu können die elastischen Halteelemente in anderen Ausgestaltungen biegeelastische Klammern oder Schnappelemente sein, also mechanische Federelemente, die aufgrund ihrer Materialeigenschaften eine definierte Ruhelage einnehmen. In weiteren Ausgestaltungen können die elastischen Halteelemente Silikonfugen oder dergleichen beinhalten.

Diese Ausgestaltungen ermöglichen einerseits eine stabile und positionsgenaue Verbindung zwischen Grundkörper und Deckplatte. Andererseits ermöglichen sie eine relative Beweglichkeit zwischen Deckplatte und Grundkörper, um Spannungen aufgrund von unterschiedlichen thermischen Ausdehnungen zu vermeiden.

In einer weiteren Ausgestaltung sind die Halteelemente unterhalb der Deckplatte angeordnet.

Diese Ausgestaltung ist von Vorteil, weil die Oberseite der Deckplatte vollständig als Führungsfläche zum Abstützen des Luftlagers zur Verfügung steht. Außerdem kann der neue Führungskörper dieser Ausgestaltung formgleich und somit kompatibel zu herkömmlichen Führungskörpern realisiert werden.

In einer weiteren Ausgestaltung sind die Halteelemente in zumindest einer Vertiefung angeordnet. Vorzugsweise befinden sich die Vertiefungen an der Oberseite des Grundkörpers, auf den die Deckplatte aufgelegt wird.

Diese Ausgestaltungen vereinfachen die Herstellung der Deckplatte, insbesondere wenn es sich um eine Deckplatte aus Glas handelt. Geeignete Vertiefungen können beispielsweise in einem Aluminiumstranggussprofil kostenneutral realisiert werden. Die Ausgestaltungen tragen somit dazu bei, die Herstellungskosten der neuen Maschine weiter zu senken. Darüber hinaus besitzt die Anordnung der Halteelemente in zumindest einer Vertiefung den Vorteil, dass die Deckplatte im Übrigen plan auf dem Grundkörper aufliegen kann, was eine stabilere Verbindung und eine bessere Abstützung der Luftlager ermöglicht.

In einer weiteren Ausgestaltung weist die zumindest eine Vertiefung parallel zu der Deckplatte einen Innendurchmesser auf, der wesentlich größer ist als ein entsprechender Außendurchmesser der Halteelemente.

In dieser Ausgestaltung ist also ein Zwischenraum zwischen den Halteelementen und den seitlichen Innenwänden der Vertiefung. Aufgrund dieses Zwischenraums können sich die Halteelemente parallel zu der Deckplatte in der Vertiefung bewegen, wodurch mechanische Spannungen zwischen den beiden Körperteilen des Führungskörpers wirkungsvoll reduziert werden.

In einer weiteren Ausgestaltung ist die zumindest eine Vertiefung eine Nut, die an dem Grundkörper verläuft.

Diese Ausgestaltung ermöglicht eine besonders einfache und kostengünstige Realisierung.

In einer weiteren Ausgestaltung ist das Luftlager versetzt zu den Vertiefungen an der Führungsfläche abgestützt.

In dieser Ausgestaltung läuft das Luftlager nicht oberhalb der Vertiefungen über die Führungsfläche, sondern mit einem seitlichen Versatz dazu, gewissermaßen also schräge neben den Vertiefungen. Dadurch wird eine besonders stabile und maßhaltige Abstützung der Luftlager auf der Führungsfläche ermöglicht.

In einer weiteren Ausgestaltung weist der Grundkörper zumindest eine erste und eine zweite Längsseite auf, auf denen zumindest eine erste und eine zweite Deckplatte angeordnet sind.

Diese Ausgestaltung ist besonders vorteilhaft, wenn der Führungskörper zwischen mehreren, einander gegenüberliegenden Luftlagern gehalten wird. Die Ausgestaltung eignet sich beispielsweise besonders gut für die Pinole eines Koordinatenmessgerätes in Portalbauweise. Indem man den Führungskörper auf gegenüberliegenden Seiten mit separaten Deckplatten realisiert, lassen sich die Herstellungskosten der Maschine noch weiter reduzieren.

In einer weiteren Ausgestaltung sind die erste und die zweite Deckplatte elastisch miteinander verbunden. In einer besonders bevorzugten Ausgestaltung umgeben die Deckplatten den Grundkörper und halten sich aufgrund ihrer gegenseitigen Verbindung gegenseitig in Position. In einer besonders bevorzugten Variante dieser Ausgestaltung sind vier Deckplatten an den vier äußeren Längsseiten eines Grundkörpers mit quadratischem Querschnitt angeordnet und die vier Deckplatten sind an ihren benachbarten Kanten mit einem dauerelastischen Klebstoff miteinander verklebt.

Diese Ausgestaltung ermöglicht eine besonders kostengünstige Realisierung eines Führungskörpers, der in zwei zueinander senkrechten Raumrichtungen mit Luftlagern gehalten wird. Insbesondere ermöglicht diese Ausgestaltung eine besonders kostengünstige Realisierung der Pinole eines Koordinatenmessgerätes (allgemeiner: einer Maschine) in Portalbauweise.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine vereinfachte, schematische Darstellung eines Koordinatenmessgerätes in Portalbauweise, bei dem die Pinole in der erfindungsgemäßen Weise realisiert ist,
- Figur 2: eine vereinfachte Darstellung eines ersten Ausführungsbeispiels für den Führungskörper des Koordinatenmessgerätes aus Figur 1,
- Figur 3: eine Querschnittsansicht, die einen mehrschichtigen Aufbau des Führungskörpers gemäß einem weiteren Ausführungsbeispiel der Erfindung zeigt,
- Figur 4: ein weiteres Ausführungsbeispiel für einen Führungskörper nach der vorliegenden Erfindung,
- Figur 5: das Ausführungsbeispiel aus Figur 4 in weiteren Details,
- Figur 6: ein weiteres Ausführungsbeispiel für einen Führungskörper nach der vorliegenden Erfindung,
- Figur 7: ein weiteres Ausführungsbeispiel für einen Führungskörper nach der vorliegenden Erfindung, und
- Figur 8: ein weiteres Ausführungsbeispiel für einen Führungskörper nach der vorliegenden Erfindung.

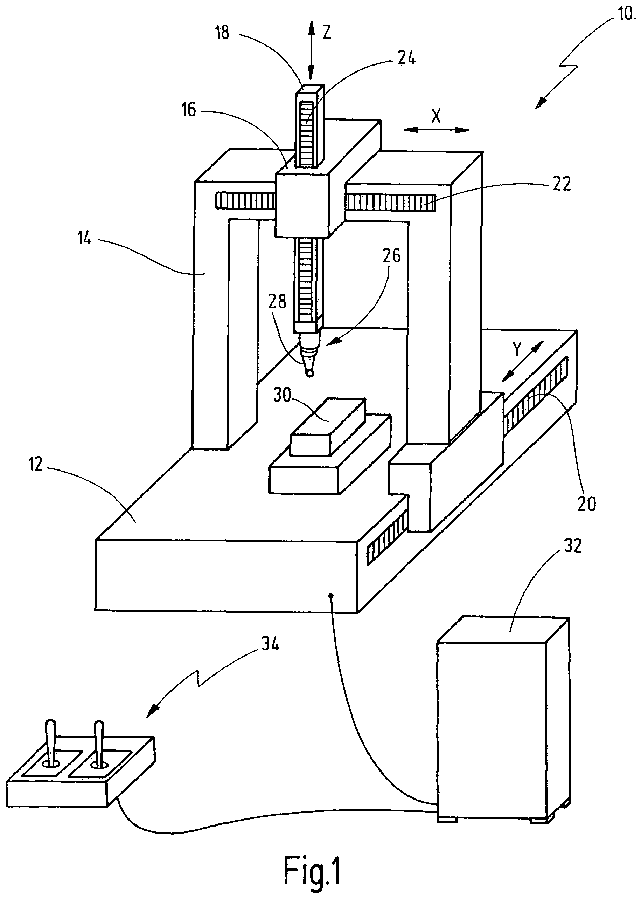

In Figur 1 ist ein Koordinatenmessgerät gemäß einem Ausführungsbeispiel der vorliegenden Erfindung in seiner Gesamtheit mit der Bezugsziffer 10 bezeichnet.

Das Koordinatenmessgerät 10 besitzt eine Basis 12, auf der ein Portal 14 angeordnet ist. Das Portal 14 kann in einer Längsrichtung, die üblicherweise als y-Achse bezeichnet wird, verfahren werden. Am oberen Querbalken des Portals 14 ist ein Schlitten 16 angeordnet, der in Querrichtung verfahrbar ist. Die Bewegungsrichtung des Schlittens 16 wird üblicherweise als x-Achse bezeichnet. Am Schlitten 16 ist eine Pinole 18 gelagert, die in einer dritten Raumrichtung verfahren werden kann. Die dritte Raumrichtung wird üblicherweise als z-Achse bezeichnet.

Die aktuelle Achsposition des Portals 14, des Schlittens 16 und der Pinole 18 lässt sich mit Hilfe von Maßstäben 20, 22, 24 bestimmen, die entlang der Bewegungsachsen angeordnet sind. In Ausführungsbeispielen handelt es sich um Glasmaßstäbe, wie sie auch bei herkömmlichen Maschinen verwendet werden. In einem anderen bevorzugten Ausführungsbeispiel sind Messskalen 20, 22, 24 direkt auf einer Deckplatte angeordnet, die nach der vorliegenden Erfindung als Führungsfläche dient (wird weiter unten erläutert).

Am unteren freien Ende der Pinole 18 ist ein Tastkopf 26 mit einem Taststift 28 (hier nicht maßtabsgetreu dargestellt) angeordnet. Der Taststift 28 trägt an seinem freien Ende eine Tastkugel, die dazu dient, einen Messpunkt an einem Messobjekt 30 anzutasten. Aus der Stellung des Tastkopfes 26 im Raum lassen sich dann Raumkoordinaten des angetasteten Messpunktes bestimmen.

Mit der Bezugsziffer 32 ist eine Auswerte- und Steuereinheit bezeichnet, die einerseits die Antriebe (hier nicht näher dargestellt) in den drei Bewegungsachsen steuert und andererseits die Raumkoordinaten eines angetasteten Messpunktes bestimmt. Wie in Figur 1 dargestellt ist, kann die Steuereinheit 32 mit einem Bedienpult 34 verbunden sein, um wahlweise eine automatische und/oder manuelle Steuerung des Tastkopfes 26 zu ermöglichen.

In einem bevorzugten Ausführungsbeispiel der Erfindung besitzt zumindest die Pinole 18 einen Führungskörper, der in der nachfolgend beschriebenen Weise ausgebildet ist.

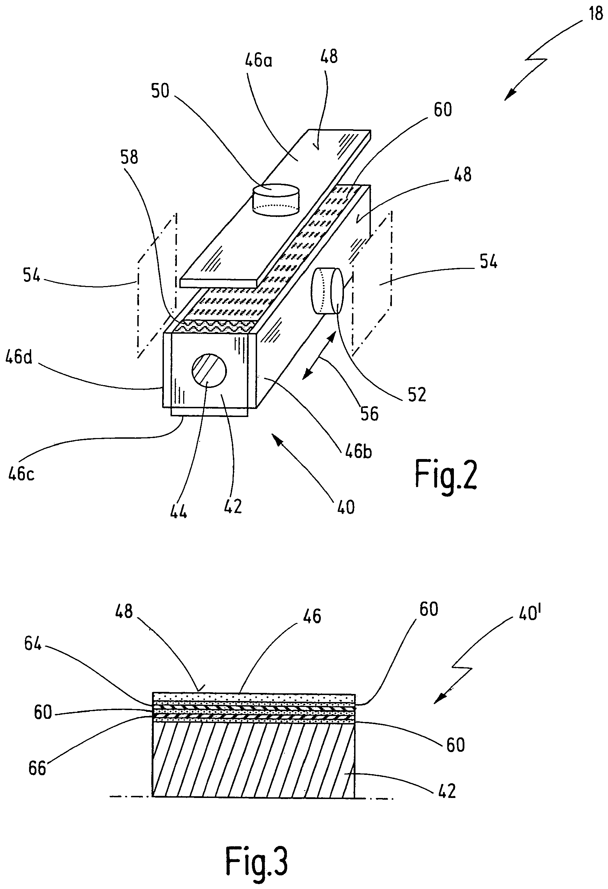

Ein erstes Ausführungsbeispiel für den Führungskörper der Pinole 18 ist in Figur 2 dargestellt. Der Führungskörper ist in seiner Gesamtheit mit der Bezugsziffer 40 bezeichnet. Er besitzt einen Grundkörper 42 mit einem quadratischen Profil. In einem bevorzugten Ausführungsbeispiel ist der Grundkörper aus Aluminium hergestellt, und es handelt sich um ein Hohlprofil, wie in Figur 2 mit der Öffnung 44 dargestellt ist.

Auf den vier äußeren Längsseiten des Grundkörpers 42 ist jeweils eine Deckplatte 46 angeordnet. In Figur 2 sind die vier Deckplatten mit den Bezugsziffern 46a, 46b, 46c und 46d bezeichnet. In bevorzugten Ausführungsbeispielen der Erfindung sind die Deckplatten 46a - 46d aus Floatglas hergestellt. Es kann sich hier jedoch auch um beschichtete oder unbeschichtete Spezialgläser oder um Deckplatten aus einem anderen Material, beispielsweise Metall oder Keramik, handeln. Die Deckplatten 46a - 46d bilden mit ihrer außenliegenden Oberseite 48 jeweils eine Führungsfläche aus, auf der ein oder mehrere Luftlager 50, 52 in an sich bekannter Weise abgestützt sind. Die Luftlager 50, 52 sind jeweils mit einem Gegenkörper verbunden, der in Figur 2 nur schematisch bei der Bezugsziffer 54 dargestellt ist. In dem Koordinatenmessgerät gemäß Figur 1 ist der Gegenkörper 54 ein Teil des Schlittens 16, in dem die Pinole 18 gelagert ist. Die Richtung, entlang der die Pinole relativ zu dem Gegenkörper 54 verfahren werden kann, ist in Figur 2 mit einem Doppelpfeil 56 angedeutet.

In dem Ausführungsbeispiel der Figur 2 sind die Deckplatten 46 an einer lokalen Klebestelle 58 mit der darunter liegenden Längsseite des Grundkörpers 42 verklebt. In dem dargestellten Ausführungsbeispiel befindet sich die lokale Klebestelle 58 am einen Ende des Grundkörpers 42. Die starre Fixierung der Deckplatte 46 an dem Grundkörper 42 ist hier jedoch auf die lokale Klebestelle 58 beschränkt. Der verbleibende Bereich der Deckplatte 46 ist auf dem Grundkörper 42 schwimmend gelagert, und zwar auf einem Haftöl 60. Eine ähnliche Art der Befestigung eines Glaskörpers auf einem Grundkörper wird beispielsweise verwendet, um einen Glasmaßstab 20, 22, 24 an einem herkömmlichen Führungskörper zu befestigen. Durch das Haftöl 60 wird die Glasplatte 46 auch abseits der lokalen Klebestelle 58 an dem Grundkörper 42 gehalten, sie kann sich jedoch in Längsrichtung weitgehend zwangsfrei ausdehnen.

Die lokale Klebestelle 58 ist hier am vorderen Ende des Grundkörpers 42 angeordnet. Sie kann jedoch auch an anderer Stelle des Grundkörpers 42 angeordnet sein (mittig oder am anderen Ende, mehrere lokale Klebestellen), und sie kann punkt- oder linienförmig ausgebildet sein.

Figur 3 zeigt ein weiteres Ausführungsbeispiel für einen erfindungsgemäßen Führungskörper 40'. Gleiche Bezugszeichen bezeichnen dieselben Elemente wie zuvor.

Hier sind zwischen der Deckplatte 46 und dem Grundkörper 42 zwei Zwischenelemente 64, 66 angeordnet. Das Zwischenelement 64 ist eine Stahlfolie mit einem thermischen Ausdehnungskoeffizienten von etwa 12,0 µm/mK. Das Zwischenelement 66 ist hier eine Messingfolie mit einem thermischen Ausdehnungskoeffizienten von etwa 18,5 µm/mK. Der Grundkörper 42 besteht aus Aluminium mit einem thermischen Ausdehnungskoeffizienten von etwa 23,8 µm/mK und die Deckplatte 46 besteht aus Glas mit einem thermischen Ausdehnungskoeffizienten von etwa 7,7 µm/mK. Die einzelnen Lagen sind mit einem Klebstoff oder Haftöl 60 miteinander verbunden. Durch den mehrlagigen Aufbau mit unterschiedlichen Materialschichten wird ein stufenartiger Übergang zwischen dem hohen Ausdehnungskoeffizienten von Aluminium und dem relativ kleinen Ausdehnungskoeffizienten von Glas erreicht. Spannungen aufgrund temperaturbedingter Ausdehnungen werden schichtweise abgebaut. Gleichzeitig bietet dieses Ausführungsbeispiel eine hohe partielle Drucksteifigkeit, was zum Abstützen der Luftlager 50, 52 von Vorteil ist.

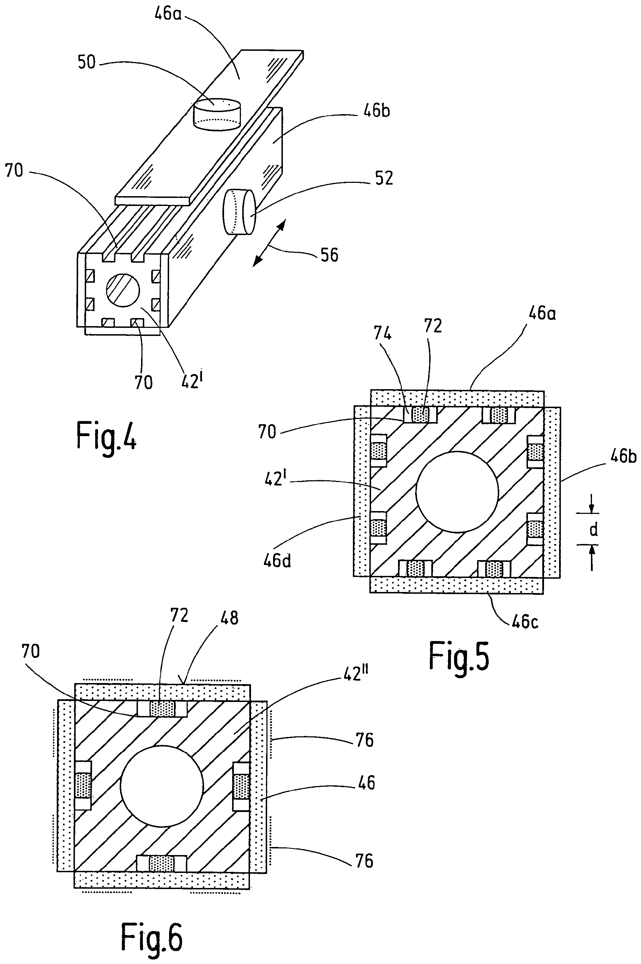

Figur 4 zeigt ein Ausführungsbeispiel mit einem Grundkörper 42', in dessen äußeren Längsseiten Nuten 70 verlaufen. Die Nuten 70 dienen zur Aufnahme von Klebepfropfen 72, wie dies in Figur 5 im Querschnitt dargestellt ist. Die Klebepfropfen 72 sind sowohl an der Unterseite der Deckplatten 46 als auch am Grund der Nuten 70 verklebt. In bevorzugten Ausführungsbeispielen handelt es sich um einen dauerelastischen Klebstoff. In den bevorzugten Ausführungsbeispielen besitzen die Nuten 70 einen lichten Innendurchmesser d, der deutlich größer ist als der entsprechende Außendurchmesser der Klebepfropfen 72, so dass seitlich von den Klebepfropfen 72 jeweils ein Zwischenraum 74 verbleibt. Aufgrund der Zwischenräume 74 können sich die Klebepfropfen 72 seitlich in den Nuten 70 bewegen und die Deckplatten 46 können dieser seitlichen Bewegung trotz der Fixierung an dem Grundkörper 42' folgen. Dementsprechend sind die Deckplatten 46 trotz unterschiedlicher thermischer Ausdehnungskoeffizienten weitgehend spannungsfrei an dem Grundkörper 42 befestigt.

Besonders vorteilhaft ist es, wenn die Klebepfropfen 72 nicht über die gesamte Länge der Nuten 70 vorhanden sind, sondern nur lokale Klebestellen bilden. In diesem Fall kann sich jede Deckplatte 46 sowohl in Längsrichtung als auch in Querrichtung gegenüber dem Grundkörper 42 bewegen. Aus Stabilitätsgründen können auch mehrere lokale Klebestellen 58 über die Länge des Grundkörpers 42' vorgesehen sein.

In einem weiteren Ausführungsbeispiel gemäß Figur 6 besitzt der Grundkörper 42" an jeder Längsseite nur eine Längsnut 70, die etwa mittig zu der Längsseite verläuft. Damit liegt die Deckplatte 46 rechts und links von der Nut 70 direkt auf der entsprechenden Längsseite des Grundkörpers 42" auf, wobei sich vorteilhafterweise wiederum ein Haftöl (hier nicht dargestellt) zwischen der Unterseite der Deckplatte 46 und dem Grundkörper 42" befinden kann. Hier ist es bevorzugt, wenn die Luftlager nicht mittig auf der Führungsfläche 48 abgestützt sind, sondern seitlich (nach rechts und/oder nach links) versetzt zu der mittigen Nut 70 laufen. Die Luftlager 50, 52 stützen sich also in Bereichen der Führungsfläche 48 ab, die bei Bezugsziffer 76 angedeutet ist. Wie in Figur 6 dargestellt ist, werden in diesem Ausführungsbeispiel jeweils zumindest zwei Luftlager an jeder Führungsfläche 48 verwendet.

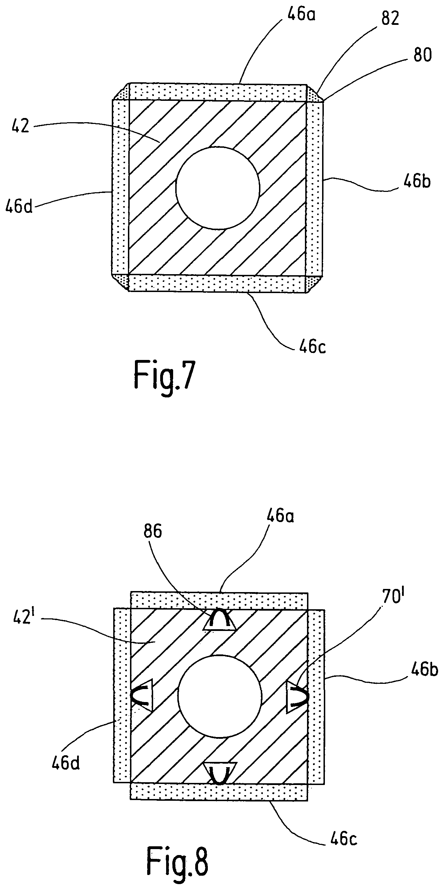

Figur 7 zeigt ein Ausführungsbeispiel, bei dem ein Grundkörper 42 ähnlich zu demjenigen aus Figur 2 zur Anwendung kommt. In diesem Fall sind die Deckplatten 46a - 46d an ihren Außenkanten 80 miteinander verbunden, wie dies bei Bezugsziffer 82 dargestellt ist. In bevorzugten Ausführungsbeispielen ist die Verbindung mit Hilfe eines dauerelastischen Klebstoffes 82 hergestellt. Außerdem ist es bevorzugt, wenn die Deckplatten 46a - 46d wiederum über ein Haftöl 60 (hier nicht dargestellt) auf dem Grundkörper 42 gelagert sind. Eine lokale Klebestelle 58, wie in Figur 2 dargestellt, kann ebenfalls verwendet werden. Sie kann in dem Ausführungsbeispiel gemäß Figur 7 jedoch auch entfallen.

Im Ausführungsbeispiel gemäß Figur 7 werden die Deckplatten durch ihre gegenseitige elastische Verbindung auf dem Grundkörper 42 gehalten.

Figur 8 zeigt ein weiteres Ausführungsbeispiel zur Befestigung der Deckplatten 46a - 46d an einem Grundkörper 42', der hier wiederum Längsnuten 70' aufweist. Anders als bei den Ausführungsbeispielen gemäß Figur 5 und 6 sind die Längsnuten 70' hier jedoch konisch oder in anderer Weise mit einer Hinterschneidung ausgebildet. An der Rückseite jeder Deckplatte 46a - 46d sind ein oder mehrere Federelemente 86 befestigt, beispielsweise verklebt. Die Federelemente 86 greifen in die Nuten 70' ein und halten die Deckplatten 46a - 46d aufgrund ihrer Federkraft in den Nuten 70'. Da die Federelemente 46 flexibel sind und sich zudem in den Längsnuten 70' bewegen können, sind die Deckplatten 46a - 46d weitgehend spannungsfrei an dem Grundkörper 42 befestigt. Ergänzend kann noch hier ein Haftöl 60 (nicht dargestellt) oder dergleichen zwischen der Unterseite der Deckplatten 46a - 46d und dem Grundkörper 42' vorgesehen sein.

In weiteren bevorzugten Ausführungsbeispielen der Erfindung kann die Skalierung, die für den Maßstab 24 benötigt wird, direkt auf einer der Deckplatten 46a - 46d aufgebracht sein. Des Weiteren können auch andere Führungskörper des Koordinatenmessgerätes 10 in der erfindungsgemäßen Weise ausgebildet sein.

Schließlich kann alternativ zu einer lokalen Klebestelle 58, wie sie in Figur 2 dargestellt ist, auch eine formschlüssige oder anderweitige mechanische Verbindung verwendet werden, um die Deckplatte 46 lokal an dem Grundkörper 42 zu fixieren. Des Weiteren ist es möglich, an Stelle von Längsnuten 70 Quernuten in den Längsseiten des Grundkörpers 42 vorzusehen, um Halteelemente aufzunehmen.

In weiteren Ausführungsbeispielen (hier nicht dargestellt) kann eine Deckplatte 46 mit Hilfe von äußeren Klammern, Bügeln oder dergleichen an einem Grundkörper 42 befestigt werden, wobei die Klammern oder Bügel die Deckplatte 46 dann im Kantenbereich umgreifen. Generell ist es in allen Fällen bevorzugt, wenn die Fixierung der Deckplatte an dem Grundkörper allenfalls stellenweise starr ist, so dass sich die Deckplatte zumindest bereichsweise gegenüber dem Grundkörper bewegen kann.

Was das Material der Deckplatte angeht, bieten sich sämtliche Gläser an, deren Ebenheit im Bereich 1 µm oder kleiner liegt. Die Rautiefe sollte etwa Ra = 0,8 oder besser betragen. Wenngleich die Verwendung von Glas als Material für die Deckplatten den Vorteil besitzt, dass die Deckplatten vollständig korrosionsfrei sind, können auch andere Materialien einschließlich bearbeiteter Metalle für die Deckplatten verwendet werden.

## Patentansprüche

1. Maschine zum Vermessen oder Bearbeiten von Werkstücken (30), insbesondere Koordinatenmessgerät, mit einem Maschinenkopf (26), der relativ zu einer Werkstückaufnahme (12) verfahrbar ist, und mit einem Maschinengestell (14, 16, 18), an dem zumindest der Maschinenkopf (26) angeordnet ist, wobei das Maschinengestell (14, 16, 18) zumindest einen Führungskörper (40) mit zumindest einer Führungsfläche (48) für ein Luftlager (50, 52) sowie einen Gegenkörper (54) aufweist, der an der Führungsfläche (48) über das Luftlager (50, 52) abgestützt ist, und wobei der Führungskörper (40) und der Gegenkörper (54) entlang der Führungsfläche (48) relativ zueinander verfahrbar sind, wobei der Führungskörper (40) einen tragenden Grundkörper (42) und eine Deckplatte (46) beinhaltet, die auf dem Grundkörper (42) angeordnet ist und die Führungsfläche (48) für das Luftlager (50, 52) bildet, **dadurch gekennzeichnet, dass** die Deckplatte (46) aus Glas ist, insbesondere aus Floatglas.

2. Maschine nach Anspruch 1, **dadurch gekennzeichnet, dass** der Grundkörper (42) und die Deckplatte (46) aus verschiedenen Materialien hergestellt sind.

3. Maschine nach Anspruch 1 oder 2, **dadurch gekennzeichnet, dass** der Grundkörper (42) einen ersten thermischen Ausdehnungskoeffizienten besitzt, dass die Deckplatte (46) einen zweiten thermischen Ausdehnungskoeffizienten besitzt, und dass zwischen der Deckplatte (46) und dem Grundkörper (42) zumindest ein Zwischenelement (64, 66) angeordnet ist, das einen dritten thermischen Ausdehnungskoeffizienten besitzt, wobei der dritte thermische Ausdehnungskoeffizient größenmäßig zwischen dem ersten und zweiten Ausdehnungskoeffizienten liegt.

4. Maschine nach einem der Ansprüche 1 bis 3, **dadurch gekennzeichnet, dass** die Deckplatte (46) weitgehend kongruent auf dem Grundkörper (42) aufliegt.

5. Maschine nach einem der Ansprüche 1 bis 4, **dadurch gekennzeichnet, dass** die Deckplatte (46) zumindest teilweise beweglich auf dem Grundkörper (42) angeordnet ist.

6. Maschine nach einem der Ansprüche 1 bis 5, **dadurch gekennzeichnet, dass** die Deckplatte (46) und der Grundkörper (42) stellenweise starr miteinander verbunden sind (58).

7. Maschine nach einem der Ansprüche 1 bis 6, **dadurch gekennzeichnet, dass** die Deckplatte (46) an dem Grundkörper (42) mit Hilfe von elastischen Haltelementen (72; 86) fixiert ist.

8. Maschine nach Anspruch 7, **dadurch gekennzeichnet, dass** die Halteelemente (72; 86) unterhalb der Deckplatte (46) angeordnet sind.

9. Maschine nach Anspruch 8, **dadurch gekennzeichnet, dass** die Halteelemente (72; 86) in zumindest einer Vertiefung (70) angeordnet sind.

10. Maschine nach Anspruch 9, **dadurch gekennzeichnet, dass** die zumindest eine Vertiefung (70) parallel zu der Deckplatte (46) einen Innendurchmesser (d) aufweist, der wesentlich größer ist als ein entsprechender Außendurchmesser der Halteelemente (72).

11. Maschine nach Anspruch 9 oder 10, **dadurch gekennzeichnet, dass** die zumindest eine Vertiefung (70) eine Nut ist, die an dem Grundkörper (42) verläuft.

12. Maschine nach einem der Ansprüche 9 bis 11, **dadurch gekennzeichnet, dass** das Luftlager (76) versetzt zu den Vertiefungen (70) an der Führungsfläche (48) abgestützt ist.

13. Maschine nach einem der Ansprüche 1 bis 12, **dadurch gekennzeichnet, dass** der Grundkörper (42) zumindest eine erste und eine zweite Längsseite aufweist, auf denen zumindest eine erste und eine zweite Deckplatte (46a-d) angeordnet sind.

14. Maschine nach Anspruch 13, **dadurch gekennzeichnet, dass** die erste und die zweite Deckplatte (46a-d) elastisch miteinander verbunden sind.

## Claims

1. Machine for measuring or machining workpieces (30), in particular a coordinate measuring apparatus, having a machine head (26) which is displaceable relative to a workpiece receptacle (12), and having a machine frame (14, 16, 18) on which at least the machine head (26) is disposed, wherein the machine frame (14, 16, 18) has at least one guide body (40) having at least one guide face (48) for an air bearing (50, 52) and a counter body (54) which is supported on the guide face (48) by way of the air bearing (50, 52), and wherein the guide body (40) and the counter body (54) are displaceable relative to one another along the guide face (48), wherein the guide body (40) includes a supporting main body (42) and a cover plate (46) which is disposed on the main body (42) and forms the guide face (48) for the air bearing (50, 52), **characterized in that** the cover plate (46) is of glass, in particular float glass.

2. Machine according to Claim 1, **characterized in that** the main body (42) and the cover plate (46) are made from dissimilar materials.

3. Machine according to Claim 1 or 2, **characterized in that** the main body (42) has a first coefficient of thermal expansion, **in that** the cover plate (46) has a second coefficient of thermal expansion, and **in that** at least one intermediate element (64, 66) which has a third coefficient of thermal expansion is disposed between the cover plate (46) and the main body (42), wherein the third coefficient of thermal expansion in terms of value is between the first and the second coefficient of thermal expansion.

4. Machine according to one of Claims 1 to 3, **characterized in that** the cover plate (46) bears on the main body (42) in a largely congruent manner.

5. Machine according to one of Claims 1 to 4, **characterized in that** the cover plate (46) is disposed so as to be at least partially movable on the main body (42).

6. Machine according to one of Claims 1 to 5, **characterized in that** the cover plate (46) and the main body (42) at points are rigidly interconnected.

7. Machine according to one of Claims 1 to 6, **characterized in that** the cover plate (46) is fixed to the main body (42) with the aid of elastic holding elements (72; 86).

8. Machine according to Claim 7, **characterized in that** the holding elements (72; 86) are disposed below the cover plate (46).

9. Machine according to Claim 8, **characterized in that** the holding elements (72; 86) are disposed in at least one depression (70).

10. Machine according to Claim 9, **characterized in that** the at least one depression (70), in a manner parallel with the cover plate (46), has an internal diameter (d) which is substantially larger than a respective external diameter of the holding elements (72).

11. Machine according to Claim 9 or 10, **characterized in that** the at least one depression (70) is a groove which runs on the main body (42).

12. Machine according to one of Claims 9 to 11, **characterized in that** the air bearing (76) is supported on the guide face (48) so as to be offset in relation to the depressions (70).

13. Machine according to one of Claims 1 to 12, **characterized in that** the main body (42) has at least one first and one second longitudinal side, on which at least one first and one second cover plate (46a-d) are disposed,

14. Machine according to Claim 13, **characterized in that** the first and the second cover plate (46a-d) are interconnected in an elastic manner.

## Revendications

1. Machine de mesure ou d'usinage de pièces (30), en particulier appareil de mesure de coordonnées, avec une tête de machine (26), qui est déplaçable par rapport à un porte-pièce (12), et avec un bâti de machine (14, 16, 18), sur lequel au moins la tête de machine (26) est disposée, dans laquelle le bâti de machine (14, 16, 18) présente au moins un corps de guidage (40) avec au moins une face de guidage (48) pour un palier d'air (50, 52) ainsi qu'un corps opposé (54), qui est appuyé sur la face de guidage (48) au moyen du palier d'air (50, 52), et dans laquelle le corps de guidage (40) et le corps opposé (54) sont déplaçables l'un par rapport à l'autre le long de la face de guidage (48), dans laquelle le corps de guidage (40) comprend un corps de base porteur (42) et une plaque de couverture (46), qui est disposée sur le corps de base (42) et qui forme la face de guidage (48) pour le palier d'air (50, 52), **caractérisée en ce que** la plaque de couverture (46) est en verre, en particulier en verre flotté.

2. Machine selon la revendication 1, **caractérisée en ce que** le corps de base (42) et la plaque de couverture (46) sont fabriqués en des matériaux différents.

3. Machine selon la revendication 1 ou 2, **caractérisée en ce que** le corps de base (42) possède un premier coefficient de dilatation thermique, **en ce que** la plaque de couverture (46) possède un deuxième coefficient de dilatation thermique, et **en ce qu'**au moins un élément intermédiaire (64, 66) est disposé entre la plaque de couverture (46) et le corps de base (42), élément qui possède un troisième coefficient de dilatation thermique, dans laquelle le troisième coefficient de dilatation thermique se situe, par sa grandeur, entre le premier et le deuxième coefficients de dilatation thermique.

4. Machine selon l'une quelconque des revendications 1 à 3, **caractérisée en ce que** la plaque de couverture (46) s'applique de façon largement congruente sur le corps de base (42).

5. Machine selon l'une quelconque des revendications 1 à 4, **caractérisée en ce que** la plaque de couverture (46) est disposée au moins partiellement de façon mobile sur le corps de base (42).

6. Machine selon l'une quelconque des revendications 1 à 5, **caractérisée en ce que** la plaque de couverture (46) et le corps de base (42) sont rigidement assemblés l'un à l'autre par points (58).

7. Machine selon l'une quelconque des revendications 1 à 6, **caractérisée en ce que** la plaque de couverture (46) est fixée sur le corps de base (42) à l'aide d'éléments de maintien élastiques (72; 86).

8. Machine selon la revendication 7, **caractérisée en ce que** les éléments de maintien (72; 86) sont disposés en dessous de la plaque de couverture (46).

9. Machine selon la revendication 8, **caractérisée en ce que** les éléments de maintien (72; 86) sont disposés dans au moins un creux (70).

10. Machine selon la revendication 9, **caractérisée en ce que** ledit au moins un creux (70) présente, parallèlement à la plaque de couverture (46), un diamètre intérieur (d), qui est sensiblement plus grand qu'un diamètre extérieur correspondant des éléments de maintien (72).

11. Machine selon la revendication 9 ou 10, **caractérisée en ce que** ledit au moins un creux (70) est une rainure, qui court sur le corps de base (42).

12. Machine selon l'une quelconque des revendications 9 à 11, **caractérisée en ce que** le palier d'air (76) est appuyé sur la face de guidage (48) en décalage par rapport aux creux (70).

13. Machine selon l'une quelconque des revendications 1 à 12, **caractérisée en ce que** le corps de base (42) présente au moins un premier et un deuxième longs côtés, sur lesquels au moins une première et une deuxième plaques de couverture (46ad) sont disposées.

14. Machine selon la revendication 13, **caractérisée en ce que** la première et la deuxième plaques de couverture (46a-d) sont élastiquement reliées l'une à l'autre.
